(19) Europäisches Patentamt
European Patent Office
Office européen des brevets

(11) EP 0 622 436 B1

(12) EUROPÄISCHE PATENTSCHRIFT

(45) Veröffentlichungstag und Bekanntmachung des Hinweises auf die Patenterteilung:
**09.10.1996 Patentblatt 1996/41**

(51) Int Cl.[6]: **C09J 175/04**, C08K 5/00
// (C09J175/04, 161:04)

(21) Anmeldenummer: **94105770.5**

(22) Anmeldetag: **14.04.1994**

(54) **Wässrige Polyurethan-dispersion und deren Verwendung als Klebstoff**

Aqueous polyurethane dispersion and its use as an adhesive

Dispersion aqueuse de polyuréthane et son utilisation comme matière adhesive

(84) Benannte Vertragsstaaten:
**BE DE ES FR GB IT NL SE**

(30) Priorität: **30.04.1993 DE 4314237**

(43) Veröffentlichungstag der Anmeldung:
**02.11.1994 Patentblatt 1994/44**

(73) Patentinhaber: **BASF Aktiengesellschaft**
**67063 Ludwigshafen (DE)**

(72) Erfinder:
- **Licht, Ulrike, Dr.**
  **D-68163 Mannheim (DE)**
- **Wallon, Alexander, Dr.**
  **D-67117 Limburgerhof (DE)**
- **Auchter, Gerhard, Dr.**
  **D-67098 Bad Duerkheim (DE)**
- **Maempel, Lothar, Dr.**
  **D-68782 Bruehl (DE)**
- **Seibert, Horst**
  **D-67136 Fussgoenheim (DE)**
- **Haeberle, Karl, Dr.**
  **D-67346 Speyer (DE)**
- **Fries, Werner, Dr.**
  **D-67459 Boehl-Iggelheim (DE)**

(56) Entgegenhaltungen:
**EP-A- 0 228 481**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 622 436 B1

Printed by Jouve, 75001 PARIS (FR)

## Beschreibung

Die Erfindung betrifft die Verwendung einer wäßrigen Polyurethan-dispersion als Klebstoff. Zur Vermeidung von Lösemittelabfällen und -emissionen finden zunehmend wäßrige Polymerdisperionen, insbesondere auch Polyurethandispersionen, als Klebstoffe Verwendung. Polyurethandispersionen sind z.B. in der DE-A-39 03 538 und DE-A-14 95 745 beschrieben. Da die mechanischen Eigenschaften, insbesondere die Wärmestandfestigkeit, von mit derartigen Dispersionen erhältlichen Verklebungen oft unzureichend sind, werden sie z.B. durch Zusatz von Polyisocyanaten, wie sie z.B. in der EP-A-02 08 059 und US-A-47 62 880 beschrieben sind, vernetzt. Diese Art der Vernetzung hat allerdings den Nachteil, daß die Topfzeit, d.h. die Zeit, die nach Zugabe des Vernetzers für die Verarbeitung verbleibt, sehr kurz ist.

Die Vernetzung von Polyurethandispersionen mittels polyvalenter Metallkomplexe ist aus der EP-A 228 481 bekannt. Gegenstand der EP-A-228 481 sind wieder entfernbare Fußbodenbeschichtungen.

Aus der nicht-veröffentlichten deutschen Patentanmeldung P 4137556.4 sind Polyurethandispersionen bekannt, die ein haftungsverbesserndes Polymer und anorganische Salze enthalten.

Aufgabe der vorliegenden Erfindung war die Verbesserung der mechanischen Eigenschaften, insbesondere der Wärmestandfestigkeit bei der Verwendung von Polyurethandispersionen als Klebstoff.

Demgemäß wurde die Verwendung von wäßrigen Dispersionen, enthaltend ein Polyurethan, welches im wesentlichen aufgebaut ist aus

a) organischen Polyisocyanaten

b) Polydroxylverbindungen mit einem Molekulargewicht über 500 bis 5000 g/mol,

c) Verbindungen mit mindestens einer gegenüber Isocyanat reaktiven Gruppe und mit mindestens einer ionischen Gruppe oder in eine ionische Gruppe überführbare Gruppe,

d) gegebenenfalls von (c) verschiedenen Verbindungen mit mindestens zwei gegenüber Isocyanat reaktiven funktionellen Gruppen und einem Molgewicht von 60 bis 500 g/mol,

und mindesten einem Chelatkomplex aus einem mehrwertigen Metall als Zentralatom und einem mehrzähnigen Liganden, als Klebstoff, gefunden. Gefunden wurden auch wäßrige Dispersionen, welche sich für die Verwendung als Klebstoff eignen.

Das Polyurethan ist im wesentlichen, bevorzugt ausschließlich, aufgebaut aus den Komponenten a-d). Bei den gegenüber Isocyanat reaktiven funktionellen Gruppen handelt es sich um Hydroxyl-, primäre oder sekundäre Aminogruppen.

Als Polyisocyanate (a) sind insbesondere aliphatische, cycloaliphatische und aromatische Diisocyanate geeignet. Vorzugsweise werden solche mit der allgemeinen Formel $X(NCO)_2$ eingesetzt, wobei X für einen aliphatischen Kohlenwasserstoffrest mit 4 bis 12 C-Atomen, einen cycloaliphatischen mit 6 bis 15 Atomen oder einen aromatischen Kohlenwasserstoffrest mit 6 bis 15 C-Atomen steht.

Geeignete aliphatische, cycloaliphatische und aromatische Diisocyanate sind z.B. 1,4-Butandiisocyanat, 1,6-Hexandiisocyanat, 2,2,4- und 2,4,4-Trimethylhexamethylendiisocyanat, Cyclohexandiisocyanat, Methylcyclohexandiisocyanat, Isophorondiisocanat, 4,4'-Diisocyanatodiphenylmethan, 4,4'-Diisocyanatodicyclohexylmethan, 2,4- und 2,6-Toluylendiisocyanat, Tetramethylxylylendiisocyanat (TMXDI).

Es können auch Gemische der Diisocyanate eingesetzt werden. Insbesondere haben sich Gemische von aliphatischen bzw. cycloaliphatischen Diisocyanaten mit aromatischen Diisocyanten im Molverhältnis von 1:4 bis 5:1 als geeignet erwiesen.

Neben den Diisocyanaten können in untergeordneten Mengen auch Monoisocyanate zur Molekulargewichtsregulierung eingesetzt werden.

Mitverwendet werden können ebenfalls Verbindungen mit mehr als 2 Isocyanatgruppen, wie Biurete oder Isocyanurate, z.B. des Isophorondiisocyanates oder 1,6-Hexamethylendiisocyants.

Geeignete Polyhydroxylverbindungen, insbesondere Dihydroxylverbindungen (b), mit einem Molekulargewicht über 500 bis 5000 sind die bekannten Polyester, Polyether, Polythioether, Polylactone, Polyacetale, Polycarbonate und Polyesteramide mit 2 Hydroxylgruppen. Bevorzugt sind solche Dihydroxylverbindungen, deren Molekulargewicht zwischen 750 und 3000 liegt. Selbstverständlich können auch Gemische dieser Dihydroxylverbindungen eingesetzt werden.

Zusätzlich eingesetzt werden können gegebenenfalls auch Verbindungen mit mehr als 2 Hydroxylgruppen, z.B. mit Polypropylenoxid alkoxyliertes Trimethylolpropan oder Glycerin.

Als von b) verschiedene Komponente (c) geeignet sind z.B. aliphatische, cycloaliphatische oder aromatische Mono- oder Dihydroxycarbonsäuren. Bevorzugt sind Dihydroxyalkylcarbonsäuren, insbesondere mit 3 bis 10 C-Atomen, wie sie auch in der US-A-3 412 054 beschrieben sind. Insbesondere bevorzugt sind Verbindungen der allgemeinen Formel

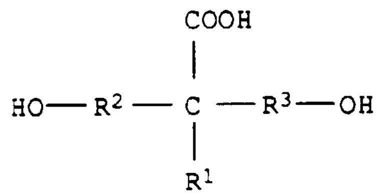

in welcher $R^1$ für ein Wasserstoffatom oder einen Alkylrest mit 1 bis 4 Kohlenstoffatomen und $R^2$ sowie $R^3$ für eine $C_1$-$C_4$-Alkylengruppe stehen. Beispielsweise genannt sei 2,2-Dimethylolpropionsäure.

Erwähnenswert sind weiterhin eine oder zwei Hydroxylgruppen bzw. Aminogruppen enthaltende tertiäre Ammoniumsalze sowie Aminocarbonsäuren oder Aminosulfonsäuren z.B. Lysin, -Alanin, N-(2-Aminoethyl)-2-aminoethansulfonsäure und die in der DE-A-20 34 479 genannten Addukte von aliphatischen diprimären Diaminen an -olefinische Carbonsäuren, z.B. das Addukt von Ethylendiamin an Acrylsäure.

Aufbaukomponente (c) enthält Ionengruppen bzw. in Ionengruppen überführbare Gruppen, um die Dispergierbarkeit des Polyurethans in Wasser zu gewährleisten. Ihr Anteil beträgt üblicherweise 0,03 bis 0,5 Grammäquivalent, vorzugsweise 0,05 - 0,4 Grammäquivalent, bezogen auf 1 Mol Isocyanatgruppen.

Zur Überführung von potentiellen anionischen Gruppen, z.B. Carbonsäuregruppen oder Sulfonsäuregruppen in Ionengruppen können anorganische und/oder organische Basen wie Natriumhydroxid, Kaliumhydroxid, Kaliumcarbonat, Natriumhydrogencarbonat, Ammoniak oder primäre, sekundäre und besonders tertiäre Amine, z.B. Triethylamin oder Dimethylaminopropanol eingesetzt werden.

Zur Überführung der potentiellen kationischen Gruppen, z.B. der tertiären Aminogruppen in die entsprechenden Kationen, z.B. Ammoniumgruppen, sind als Neutralisationsmittel anorganische oder organische Säuren, z.B. Salzsäure, Essigsäure, Fumarsäure, Maleinsäure, Milchsäure, Weinsäure, Oxalsäure oder Phosphorsäure oder als Quarternierungsmittel, z.B. Methylchlorid, Methyliodid, Dimethylsulfat, Benzylchlorid, Chloressigethylester oder Bromacetamid geeignet. Weitere geeignete Neutralisations- und Quarternierungsmittel sind z.B. in der US-PS 3 479 310, Spalte 6, beschrieben.

Die Neutralisation bzw. Quaternisierung der ionischen oder der potentiell ionischen Gruppen kann vor, während und insbesondere nach der Isocyanat-Polyadditionsreaktion erfolgen.

Gegebenenfalls können auch nichtionische Emulgatoren, wie einwertige Polyetheralkohole des Molgewichtsbereiches 500 bis 10 000 g/mol, vorzugsweise von 1 000 bis 5 000 g/mol mitverwendet werden. Der Einsatz nichtionischer Emulgatoren ist jedoch aufgrund des Gehalts an Verbindungen c) im allgemeinen nicht notwendig.

Aufbaukomponenten d) sind im wesentlichen Verbindungen, welche zwei Hydroxylgruppen, zwei Aminogruppen oder eine Hydroxyl- und eine Aminogruppe enthalten. In Betracht kommen z.B. Dihydroxylverbindungen, wie Propandiol-(1,3), Butandiol-(1,4), Diamine wie Ethylendiamin, Hexamethylendiamin, Piperazin, 2,5-Dimethylpiperazin, 1-Amino-3-aminomethyl- 3,5,5-trimethyl-cyclohexan (Isophorondiamin), 4,4'-Diaminodicyclohexylmethan, 2,4-Diaminocyclohexan, 1,2-Diamino-propan, Hydrazin oder Aminoalkohole wie Ethanolamin, Isopropanolamin, Methylethanolamin oder Aminoethoxyethanol.

Gegebenenfalls können ebenfalls Verbindungen mit mindestens 3 mit Isocyanat reaktiven Gruppen in Betracht kommen, z.B. Triole wie Trimethylolpropan oder Glycerin oder auch Ether- oder Estergruppen aufweisende Trihydroxylverbindungen, sowie Pentaerythrit als Tetrahydroxylverbindung, Triaminverbindungen wie Diethylentriamin, 4-Aminomethyloctandiamin, Trisaminoethylamin, Hydroxyl- und Aminogruppen enthaltende Verbindungen wie Diethanolamin.

Insgesamt wird der Anteil der Aufbaukomponenten vorzugsweise so gewählt, daß die Summe der gegenüber Isocyanat reaktiven Hydroxylgruppen und primären oder sekundären Aminogruppen 0,9 bis 1,3, besonders bevorzugt 0,95 bis 1,1 bezogen auf 1 Isocyanatgruppe beträgt.

Zur Herstellung des Polyurethans können die Aufbaukomponenten a) bis d) in einem niedrig siedenden, mit Wasser mischbaren organischen Lösungsmittel oder lösungsmittelfrei in bekannter Weise umgesetzt werden, wie es auch in der DE-A-34 37 918 beschrieben ist.

Als Lösungsmittel können alle gegenüber Isocyanaten unreaktiven Lösungsmittel eingesetzt werden. Besonders bevorzugt sind hierbei solche, die mit Wasser in beliebigen Mengen mischbar sind, wie z.B. Tetrahydrofuran, Methylethylketon, N-Methylpyrrolidon und insbesondere Aceton. Weniger bevorzugt sind hochsiedene mit Wasser mischbare Lösungsmittel, wie z.B. N-Metylpyrrolidon oder Dimethylformamid. In untergeordeneten Mengen können ebenfalls Lösungsmittel nicht mit Wasser mischbare Lösungsmittel enthalten sein, wie z.B. Toluol oder Xylol. Vorzugsweise liegt der Siedepunkt des Lösungsmittels unter 100°C.

Die Reaktionstemperatur liegt vorzugsweise bei 50 bis 120°C.

Zur Beschleunigung der Reaktion der Diisocyanate können übliche und bekannte Katalysatoren, wie Dibutylzinndilaurat, Zinn-II-octoat oder 1,4-Diazabicyclo-(2,2,2)-octan, mitverwendet werden.

Das erhaltene Polyurethan, welches im wesentlichen frei von Isocyanatgruppen ist, wird dann in Wasser dispergiert und das organische Lösungsmittel durch Destillation im gewünschten Ausmaß, im allgemeinen vollständig, entfernt.

Die Herstellung des Polyurethans kann auch in der Weise erfolgen, daß in einem organischen Lösungsmittel zunächst ein Polyurethanprepolymer hergestellt wird. Nach Zusatz des Reaktionsprodukts wird das erhaltene Polyurethanprepolymer, welches noch Isocyanatgruppen enthält, in Wasser dispergiert. Danach kann die Umsetzung mit den weiteren Aufbaukomponenten erfolgen. Anschließend kann, wie bereits oben beschrieben, das organische Lösungsmittel entfernt werden.

Die wäßrige Dispersion enthält neben dem Polyurethan noch mindestens einen Chelatkomplex aus einem mehrwertigen Metall als Zentralatom und einem mehrzähnigen Liganden.

Der Gewichtsanteil dieses Komplexes beträgt vorzugsweise 0,01 bis 10, besonders bevorzugt 0,01 bis 5, ganz besonders bevorzugt 0,02 bis 2,5 Gew.-%, bezogen auf das Polyurethan.

Das mehrwertige Metall ist vorzugsweise ausgewählt aus der Gruppe der Elemente Mg, Ca, Sr, Ni, Ba, Al, Mn, Fe, Zn, Ti, Cu und Zr.

Besonders bevorzugt sind Mg, Ca, Zn, Al und Zr.

Zumindest ein Ligand, bevorzugt alle Liganden der Zentralatome ist mehrzähnig, d.h. er hat zwei oder mehr Koordinationsbindungen mit dem Zentralatom.

Solche Koordinationsbindungen entstehen üblicherweise zwischen Gruppen, wie primären, sekundären, tertiären Aminogruppen, Ethylenoxid-, Carbonsäure-, Carboxylat-, Keto-, Aldehyd-, Nitril-, Mercapto- und aromatischen, d.h. phenolischen Hydroxylgruppen und dem Metallzentralatom.

Die Bildungskonstante $K_B$ für die Bildung eines Komplexes aus Metallzentralatom M und einem der mehrzähnigen Liganden L berechnet sich vorzugsweise als log $K_B$ mit

$$K_B = \frac{a_{ML}}{a_M \cdot a_L}$$

zu Werten von 3 bis 15. (a = Aktivität, s. auch Anorganikum, Berlin 1977, 7. Auflage S. 497).

Als mehrzähnige Liganden seien z.B. Dinitrilotetraessigsäure, Brenzkatechin, Acetylaceton, 2,2'-Bipyridyl, Ethylendiamin, Diethylendiamin, Triethylendiamin und Kronenether genannt.

Bevorzugte Chelatkomplexe sind Neutralkomplexe, welche keine positive oder negative Ladung tragen.

Ganz besonders bevorzugt sind die Acetylacetonate, insbesondere des Aluminiums und Zirkons.

Die Chelatkomplexe können zu jedem Zeitpunkt vor, während oder nach der Herstellung des Polyurethans dem Polyurethan bzw. der Polyurethandispersion zugegeben werden. Die Chelatkomplexe werden vorzugsweise in Form einer organischen Lösung zugesetzt, wobei als Lösungsmittel z.B. die oben genannten Lösungsmittel bei der Polyurethanherstellung in Betracht kommen. Vorzugsweise werden die Chelatkomplexe den Polyurethan vor dem Dispergieren in Wasser zugesetzt.

Die wäßrige Dispersion, welche erfindungsgemäß als Klebstoff verwendet wird, kann weiterhin ein die Haftung verbesserndes Polymer enthalten. Der Gewichtsanteil dieser Polymeren kann 5 bis 60 Gew.-%, vorzugsweise 5 bis 30 Gew.-%, bezogen auf das Polyurethan betragen.

Das die Haftung verbessernde Polymer wird ebenfalls bevorzugt vor dem Dispergieren dem Polyurethan bzw. dessen Prepolymeren in Wasser zugesetzt. Im Falle der Prepolymeren erfolgt dann die weitere Umsetzung zum Polyurethan.

Als haftungsverbessernde Polymere kommen eine Vielzahl von unterschiedlichen Polykondensaten, radikalisch polymerisierten Polymeren oder Polyaddukten in Betracht.

Bevorzugt handelt es sich beim haftungsverbessernden Polymer um Phenol-Formaldehyd-Kondensationsharze oder analoge Reaktionsprodukte (insbesondere Phenolharze) einer Verbindung (I), ausgewählt aus aromatischen Verbindungen mit einem aromatischen Ring, zwei kondensierten aromatischen Ringen oder zwei durch eine $C_1$-$C_8$-Alkylengruppe verbundenen aromatischen Ringen, welche an mindestens einem Ring durch mindestens eine Hydroxygruppe und an den aromatischen Ringen gegebenenfalls durch 1 bis 3 $C_1$-$C_{12}$-Alkyl- oder -Alkoxygruppen substituiert sind, und den Gemischen diese aromatischen Verbindungen mit einer Verbindung (II), ausgewählt aus Verbindungen mit 1 bis 20 Kohlenstoffatomen und mindestens einer Keto- oder Aldehydgruppe, einem $C_4$-$C_{18}$-Diolefin, Verbindungen mit 2 bis 10 Kohlenstoffatomen und mindestens einer Dreifachbindung, oder deren Gemische.

Als Verbindung (I) sind gegebenenfalls durch 1 bis 3 $C_1$-$C_8$-Alkyl- oder Alkoxygruppen substituiertes Phenol, $\alpha$-

oder β-Naphthol oder Bisphenol A bevorzugt. Die Substituenten befinden sich vorzugsweise in meta-Stellung oder p-Stellung zur Hydroxylgruppe an den aromatischen Ringen. Besonders bevorzugt sind unsubstituiertes Phenol, α- oder β-Napfthol oder Bisphenol A.

Als Verbindung (I) sind solche Verbindungen bevorzugt, die ein oder zwei, besonders bevorzugt eine Hydroxylgruppe aufweisen.

Vorzugsweise handelt es sich bei Verbindung (II) um Verbindungen mit 1 bis 14 Kohlenstoffatomen und ein oder zwei, vorzugsweise einer Keto- oder Aldehydgruppe. Diese Verbindungen können aliphatisch oder aromatisch sein oder sowohl aliphatisch als auch aromatische Gruppen enthalten. Vorzugsweise enthalten die Verbindungen neben der Keto- oder Aldehydgruppe keine weiteren funktionellen Gruppen, d.h. keine weiteren Heteroatome neben dem Sauerstoffatom der Aldehyd- oder Ketogruppe.

Als Verbindung (II) seien beispielsweise Formaldehyd, Acetaldehyd, n-Propionaldehyd, Glykolaldehyd, iso-Propionaldehyd, n-Butyraldehyd, iso-Butyraldehyd, Benzaldehyd, Glykolaldehyd, Glyoxal, Glutardialdehyd, Oxaglutardialdehyd, Aceton, Methylethylketon, Benzophenon, Butadien, Cyclopentadien und Bicyclopentadien, Acetylen, Acrolein, Methylacrolein oder deren Mischungen genannt.

Besonders bevorzugt sind Formaldehyd, Acetaldehyd, Propionaldehyd, n- und iso-Butyraldehyd, Aceton und deren Gemische.

Reaktionsprodukte der Verbindungen (I) und (II) sind allgemein bekannt. Die Reaktion verläuft analog zur Phenyl/Formaldehyd-Kondensation durch Addition der Keto-, Aldehydgruppe bzw., der Doppel- oder der Dreifachbindung vorwiegend in ortho- oder para-Stellung zur Hydroxylgruppe am aromatischen Ring.

Das Molverhältnis der Verbindung (I) zu (II) beträgt bei der Kondensationsreaktion vorzugsweise 1:0,1 bis 1:2, besonders bevorzugt 1:0,7 bis 1:1.

Die Reaktion erfolgt im allgemeinen durch Vorlegen der Verbindung (I) mit einer Säure als Katalysator, z.B. einer Halogenwasserstoffsäure, Bortrifluorid, Schwefelsäure, p-Toluolsulfonsäure, Dodecylbenzolsulfonsäure und anschließendem Zudosieren der Verbindung (II) bei 0 bis 250°C, vorzugsweise 20 bis 230°C.

Nach Ende des Zudosierens kann noch nachkondensiert werden, insbesondere bei Temperaturen von 20 bis 250°C, vorzugsweise von 80 bis 200°C. Während der Reaktion kann, falls gewünscht, Wasser gegeb. unter Verwendung eines Schleppmittels aus dem Reaktionsgemisch entfernt werden.

Der Verlauf der Umsetzung kann durch Messen des Erweichungspunktes des entstandenen Reaktionsprodukts kontrolliert werden.

Die Reaktionsprodukte haben vorzugsweise einen Erweichungspunkt (bestimmt nach DIN 52 011) von 50°C bis 200°C, besonders bevorzugt von 80 bis 140 und ganz besonders bevorzugt von 120 bis 140°C.

Weiterhin eignen sich auch Epoxidharze, vorzugsweise Umsetzungsprodukte von Epoxiden wie Epichlorhydrin mit Bisphenol A; bevorzugt sind solche mit Molgewichten (Gewichtsmittel $\overline{M}_n$) zwischen 500 und 5000 und Erweichungstemperaturen im Bereich zwischen 80 und 130°C.

Ferner kommen als haftungsverbessernde Polymere auch Polyvinylacetat, Polyvinylchlorid, Polymethacrylate, Styrol/Acrylnitril-Copolymerisate, Polyamide, Polyether, Polyester, Polyetherdiole, Polyesterdiole, Polyurethane, insbesondere salzgruppenfreien Polyurethane, und Phenacrylat in Betracht.

Als Polyvinylacetate werden die Homopolymerisate des Vinylacetates bevorzugt. Einsetzbar sind auch seine Copolymerisate, die bis zu 10 Gew.-% Comonomere wie Vinyllaurat, Vinylstearat oder bevorzugt (Meth)acrysäure-, Fumarsäure- oder Maleinsäureester mit $C_1$- bis $C_8$-Alkanolen wie Methanol, n-Butanol oder 2-Ethylhexanol enthalten. Die Polymerisate weisen üblicherweise einen K-Wert, gemessen bei 25°C in Cyclohexanon nach DIN 53 726, von 45 bis 60 auf. Unter Polyvinylchlorid werden im allgemeinen die Homopolymerisate des Vinylchlorids und seine Copolymerisate, die bis zu 10 Gew. -% an Comonomeren wie Ethylen oder Vinylacetat enthalten, verstanden. Ihr K-Wert (25°C, Cyclohexanon, DIN 53 726) sollte zwischen 45 und 55 liegen. Als Polymethacrylat setzt der Fachmann üblicherweise Homopolymerisate des Methylacrylats oder seine Copolymerisate mit bis zu 10 Gew.-%, bezogen auf das Copolymerisat, an Vinylacetat, Acrylsäureestrn von $C_1$- bis $C_8$-Alkanolen oder Methacrylsäureestern mit $C_2$- bis $C_8$-Alkanolen ein. Ihr Schmelzindex MFI, bestimmt nach DIN 53 735 (230°C/3,8 kg) liegt im allgemeinen zwischen 0,1 und 3,0. Die Herstellung dieser Polymerisate erfolgt im allgemeinen durch radikalische Polymerisation der ethylenisch ungesättigten Monomeren zwischen 30 und 150°C in Substanz, Lösung oder Emulsion mit anschließender Trocknung. Solche Polymerisate sind allgemein bekannt, z.B. aus Houben-Weyl, Methoden der organischen Chemie, Band E20, 1987, Seiten 1115-1125, 1041-1062 und 1141-1174.

Geeignete Polyamide haben eine K-Wert von 65 bis 80, gemessen in $H_2SO_4$ bei 25°C nach DIN 53 727. Es handelt sich üblicherweise um Polymere, die sich von Lactamen mit 7 bis 13 Ringgliedern wie ε-Caprolactam, ε-Capryllactam oder ω-Laurinlactam ableiten, beispielsweise wie Polycaprolactam (PA6), sowie um Polyamide, die durch Umsetzen von Dicarbonsäuren mit Diaminen erhalten werden. Beispiele hierfür sind Polyhexamethylenadipinamid (PA66), Polyhexamethylensebacinamid (PA610) oder Polyhexamethylendodecanamid (PA612) . Geeignete Dicarbonsäuren sind beispielsweise Alkandicarbonsäuren mit 4 bis 12, insbesondere 6 bis 10 Kohlenstoffatomen sowie Phthalsäure, Terephthalsäure und Isophthalsäure sowie beliebige Mischungen dieser Säuren. Als Diamine seien beispielsweise Alkandiamine mit 4 bis 12, insbesondere 4 bis 8 Kohlenstoffatomen, ferner m-Xylylendiamin, p-Xylylendiamin, deren hydrierte Derivate, Bis-(4-aminophenyl)methan, Bis-(4-aminocyclohexyl)methan oder Bis(4-aminophenyl)propan-2,2 oder deren Mischungen genannt. Aufgrund der guten Löslichkeit werden Copolymere bevorzugt, beispielsweise ein Copolyamid aus 30 bis 40 Gew.-% Adipinsäure, 15 bis 20 Gew.-% Hexamethylendiamin, 30 bis 35 Gew.-% und 15 bis 20 Gew.-% ε-Caprolactam bzw. ε-Aminocapronsäure. Die Herstellung dieser bekannten Polymeren ist allgemeines Fachwissen, s. beispielsweise Römpp, Chemielexikon, 8. Auflage, Seiten 2861, 3058 und 3267 oder EP-A-129 195 und EP-A-129 196.

Die Polyetherdiole sind an sich bekannt, beispielsweise aus Kunststoff-Handbuch Bd. 7 (1983) Seiten 42 bis 54. Genannt seien Polyethylenoxid, Polypropylenoxid oder Polytetrahydrofuran oder deren Copolymere mit zwei endständigen Hydroxylgruppen. Sie werden in bekannter Weise hergestellt durch im allgemeinen anionische Polyaddition, s. beispielsweise N.G. Gaylord, High Polymers, Bd. 13, New York 1963, Part I. Untergeordnete Bedeutung haben Polyetherole, die zur Reaktivitätserhöhung mit Ethylenoxid gepfropft sind. Die Polyetherdiole haben im allgemeinen ein Molekulargewicht von 300 bis 3000, was einem K-Wert in DMF bei 25° nach DIN 53 726 vom 25 bis 60 entspricht. Bevorzugte Molekulargewichte liegen zwischen 800 und 2200.

Als Polyether verwendet man beispielsweise Polyethylenoxid, Polypropylenoxid oder Polytetrahydrofuran. Die Polyether weisen üblicherweise einen K-Wert in DMF bei 25°C nach DIN 53 726 von 20 bis 50 auf. Sie sind allgemein bekannt z.B. aus Encyclopedia of Polymer Science and Technology, Band 6, 1967, Seite 103 und folgende, Band 9, 1968, Seite 668 und folgende und Band 13, 1970, Seite 670 und folgende.

Als Polyester werden monomerfreie ungesättigte Polyesterharze bevorzugt. Diese sind bekannte Kondensationsprodukte aus mehrwertigen, insbesondere zweiwertigen Carbonsäuren oder deren veresterbaren Derivaten, insbesondere deren Anhydride, die mit mehrwertigen, insbesondere zweiwertigen Alkoholen verestert sind, und ggf. zusätzliche Reste einwertiger Carbonsäuren oder einwertiger Alkohole enthalten. Als Ausgangsstoff seien genannt: Maleinsäure, Fumarsäure, Phthalsäure, Isophthalsäure, Terephthalsäure, Maleinsäureanhydrid, Phthalsäureanhydrid, Isophthalsäureanhydrid, Ethylenglykol, Propylenglykol, Butandiol-1,4 oder Neopentylglykol. Untergeordnete Bedeutung im Sinne der Erfindung haben solche Harze, die durch Cokondensation von Bisphenol A, Epichlorhydrinbisphenol A Kondensaten und Methacrylsäure hergestellt werden. Monomerfrei in diesem Zusammenhang bedeutet, daß diese sogenannten UP-Harze nicht in zur Vernetzung geeigneten Monomeren wie Styrol gelöst sind. Die Produkte haben üblicherweise eine Viskosität bei 150°C von 1000 bis 6000 mPa·s, insbesondere 2000 bis 4000 mPa·s.

Als Polyesterdiole sind Kondensationsprodukte, die zwei endständige OH-Gruppen aufweisen, aus Dicarbonsäuren wie Adipinsäure oder Isophthalsäure mit Diolen wie beispielsweise Butandiol-(1,4), Hexandiol-(1,6) oder Neopentylglykol, geeignet.

Der Molekulargewichtsbereich der einsetzbaren Polyesterdiole liegt im allgemeinen zwischen 300 und 5000. Bevorzugt wird ein Molekulargewicht zwischen 800 und 2500, entsprechend einem K-Wert in DMF bei 25°C nach DIN 53 276 von 30 bis 55. Diese Polymeren und ihre Herstellung sind allgemein bekannt aus Kunststoff-Handbuch Bd. 7 (1983) Seiten 54 bis 62, und DE 12 68 842.

Salzgruppenfreie Polyurethane sind bekannte Additionspolymere auf Basis von Polyether- oder Polyesterdiolen, Isocyanaten wie Hexamethylendiisocyanat, 2,4-Diisocyanatodiphenylmethan und eventuell bi- oder trifunktionellen Kettenverlängerern, die noch üblichen Verfahren (Kunststoff-Handbuch, Karl-Hanser-Verlag, Band 7, (1966) hergestellt werden. Bevorzugt werden niedermolekulare Kondensate (K-Wert in DMF bei 25°C nach DIN 53 726 zwischen 25 und 60) eingesetzt. Vernetzte Polyurethane haben untergeordnete Bedeutung.

Phenacrylate werden bevorzugt durch Addition von mit Acrylsäure oder Methacrylsäure veresterten Bisphenol A Glycidethern mit Terephthalsäure hergestellt. Ebenso können Phenacrylate auf Basis von epoxydierten Novolaken eingesetzt werden. Die K-Werte der Polymerisate liegen im allgemeinen zwischen 30 und 55 (in Cyclohexan bei 25°C nach DIN 53 726).

Die erfindungsgemäß als Klebstoff verwendeten wäßrigen Dispersionen, welche einen Chelatkomplex und gegebenenfalls ein die Haftung verbesserndes Polymer enthalten, weisen bevorzugt einen Feststoffgehalt von 10 bis 70 Gew.-%, insbesondere 20 bis 50 Gew.-% auf.

Sie können z.B. unmittelbar als Kontaktkleber zum Verkleben verschiedenster Substrate, z.B. von Holz, Kunststoff, Glas und Metall verwendet werden. Zur Erzielung spezieller Eigenschaften können den Dispersionen weitere Zusatzstoffe wie Weichmacher, Filmbildehilfsmittel, Füllstoffe oder auch Polyacrylate, Polyvinylacetate, Styrol/Butadien-Copolymerisate als Mischungskomponente etc. zugesetzt werden. Vorteilhafterweise werden Klebstoffbeschichtungen auf die Oberflächen beider zu verklebenden Substrate aufgetragen.

Die wäßrigen Dispersionen ergeben Verklebungen mit hoher Festigkeit, insbesondere einer hohen Wärmestandfestigkeit.

Beispiele

Die in den nachfolgenden Beispielen verwendeten Abkürzungen haben die nachstehend wiedergegebenen Bedeutungen:

ADS = Adipinsäure
B14 = 1,4-Butandiol
TDI = Toluylendiisocyanat
HDI = Hexamethylendiisocyanat
IPDI = Isophorondiisocyanat
PUD = Na-Salz des Michael-Addukts aus Acrylsäure und Ethylendiamin
DBTL = Dibutylzinndilaurat
DMPA = Dimethylolpropionsäure
TMP = Trimethylolpropan

Beispiel 1A (Vergleichsbeispiel)

| | Molmenge [mmol] | Gewichtsteile [g] |
|---|---|---|
| Polyesterdiol (OH-Zahl: 45,0) | 198 | 492 |
| TDI | 147 | 25,6 |
| HDI | 178 | 24,7 |
| DBTL | | 0,1 |
| Aceton I | | 133 |
| | | |
| Aceton II | | 532 |
| PUD-Salz (40%ig) | 94 | 42,0 |
| Phenol-Formaldehyd-Kondensationsharz, Erweichungstemperatur (DIN 52 011) 128°C) | | 240 |
| Aceton III | | 240 |
| entiontes Wasser | | 1200 |

Der Mischung aus entwässertem Polyesterdiol, hergestellt aus Adipinsäure und 1,4-Butandiol, Aceton I und Katalysator wurde das TDI zugegeben. Nach einer Stunde Reaktionszeit bei 65°C wurde das HDI zugesetzt und weitere 90 Minuten umgesetzt. Nach Zulauf von Aceton II hatte die Reaktionsmischung einen NCO-Gehalt von 0,75 %. Bei 50°C wurde mit PUD-Salz, das als 40%ige Lösung in Wasser vorliegt, kettenverlängert. Nach 5 Minuten wurde die Harzlösung, hergestellt aus Aceton III und einem Kondensat aus Phenol und Formaldehyd zugesetzt und 5 Minuten bei 50°C gerührt. Anschließend wurde mit Wasser dispergiert und das Aceton abdestilliert. Die Dispersion wird danach durch Rückverdünnung mit entiontem Wasser auf einen Feststoffgehalt von 40 % eingestellt.

Beispiel 1B und 1C

Die Dispersion wurde analog zu Beispiel 1A (Vergleichsbeispiel hergestellt, mit dem Unterschied, daß nach der Harzzugabe 8,0 g Aluminium- (bzw. Zirkonium-)acetylacetonat, gelöst in 100 ml Aceton, zugegeben wurden.

Beispiel 2A (Vergleichsbeispiel)

| | Molmenge [mmol] | Gewichtsteile [g] |
|---|---|---|
| Polyesterdiol (OH-Zahl: 45,0) | 191 | 476 |
| 1,4-Butandiol | 176 | 14,1 |
| Trimethylolpropan | 17,4 | 2,3 |
| IPDI | 436 | 96,9 |
| DBTL | | 0,2 |

(fortgesetzt)

| | Molmenge [mmol] | Gewichtsteile [g] |
|---|---|---|
| Aceton I | | 133 |
| | | |
| Aceton II | | 532 |
| PUD-Salz (40%ig) | 94 | 35,0 |
| Phenol-Formaldehyd-Kondensationsharz, Erweichungstemperatur (DIN 52 011) 128°C) | | 240 |
| Aceton III | | 240 |
| entiontes Wasser | | 1200 |

Der Mischung aus entwässertem Polyesterol, hergestellt aus Adipinsäure und 1,4-Butandiol, 1,4-Butandiol, Trimethylolpropan, Aceton I und Katalysator wurde das IPDI zugegeben und 130 Minuten umgesetzt. Nach Zulauf von Aceton II hat die Reaktionsmischung einen NCO-Gehalt von 0,57 %.

Bei 50°C wurde mit PUD-Salz, das als 40%ige Lösung in Wasser vorliegt, kettenverlängert. Nach 5 Minuten wurde die Harzlösung, hergestellt aus Aceton III und einem Kondensat aus Phenol und Formaldehyd, zugesetzt und 5 Minuten bei 50°C gerührt. Anschließend wurde mit Wasser dispergiert und das Aceton abdestilliert. Die Dispersion wird danach durch Rückverdünnung mit entiontem Wasser auf einen Feststoffgehalt von 40 % eingestellt.

Beispiel 2B und 2C

Die Dispersion wurde analog zu Beispiel 2A (Vergleichsbeispiel hergestellt, mit dem Unterschied, daß nach der Harzzugabe 8,0 g Aluminium- (bzw. Zirkonium-)acetylacetonat, gelöst in 100 ml Aceton, zugegeben wurden.

Beispiel 3A (Vergleichsbeispiel)

| | Molmenge [mmol] | Gewichtsteile [g] |
|---|---|---|
| Polypropylenoxid (OH-Zahl: 56) | 298 | 597 |
| Dimethylolpropionsäure | 160 | 21,5 |
| TDI | 867 | 151 |
| DBTL | | 0,3 |
| Aceton | | 978 |
| entiontes Wasser | | 1200 |
| 30 gew.-%ige NaOH-Lösung | 112 | 4,5 |

Der Mischung aus entwässertem Polypropylenoxid, Dimethylolproionsäure und Katalysator wurde das TDI zugegeben und bei einer Reaktionstemperatur von 105°C 3 Stunden umgesetzt. Nach Zulauf von Aceton hatte die Reaktionsmischung einen NCO-Gehalt von 0,45 %.

Nach dem Abkühlen der Lösung auf 30°C wurde die NaOH-Lösung zugesetzt und innerhalb von 20 Minuten mit Wasser dispergiert, und das Aceton abdestilliert. Die Dispersion wurde danach durch Rückverdünnung mit entiontem Wasser auf einen Feststoffgehalt von 40 % eingesetellt.

Beispiel 3B und 3C

Die Dispersion wurde analog zu Beispiel 3A (Vergleichsbeispiel hergestellt, mit dem Unterschied, daß nach der NaOH-Zugabe 8,0 g Aluminium- (bzw. Zirkonium-)acetylacetonat, gelöst in 100 ml Aceton, zugegeben wurden.

Beispiel 4A (Vergleichsbeispiel)

Die Herstellung der Dispersion erfolgt analog zu Vergleichsbeispiel 1. Statt des Phenol-Formaldehyd-Harzes wird

jedoch ein Harz auf Basis Phenol und einem Gemisch aus n- und iso-Butyraldehyd eingesetzt (Molverhältnis n- zu iso-Butylraldehyd = 1:1). Erweichungspunkt (DIN 52 011): 153°C

Beispiel 4B und 4C

Die Dispersion wurde analog zu Beispiel 4A (Vergleichsbeispiel hergestellt, mit dem Unterschied, daß nach der Harzzugabe 8,0 g Aluminium (bzw. Zirkonium-)acetylacetonat, gelöst in 100 ml Aceton, zugegeben wurden.

Beispiel 5A (Vergleichsbeispiel)

| | Molmenge [mmol] | Gewichtsteile [g] |
|---|---|---|
| Polyesterdiol (OH-Zahl: 45,0) | 196 | 489 |
| TDI | 159 | 27,8 |
| HDI | 159 | 26,8 |
| DBTL | | 0,1 |
| Aceton I | | 133 |
| | | |
| Aceton II | | 532 |
| PUD-Salz (40%ig) | 94 | 42,0 |
| Phenol-iso-Butyraldehyd-Kondensationsharz, Erweichungstemperatur (DIN 52 011) 132°C) | | 240 |
| Aceton III | | 240 |
| entiontes Wasser | | 1200 |

Die Herstellung erfolgt analog zu Beispiel 1, mit der Ausnahme, daß die Reaktionszeit mit HDI auf 80 Minuten verlängert ist.

Beispiel 5B und 5C

Die Dispersion wurde analog zu Beispiel 5A (Vergleichsbeispiel hergestellt, mit dem Unterschied, daß nach der Harzzugabe 8,0 g Aluminium- (bzw. Zirkonium-)acetylacetonat, gelöst in 100 ml Aceton, zugegeben wurden.

Beispiel 6A (Vergleichsbeispiel)

| | Molmenge [mmol] | Gewichtsteile [g] |
|---|---|---|
| Polyetherol (OH-Zahl:56) | 200 | 401 |
| Dimethylolpropionsäure | 161 | 21,6 |
| TDI | 670 | 117 |
| DBTL | | 0,1 |
| | | |
| Aceton I | | 684 |
| Phenol-iso-Butyraldehyd-Kondensationsharz, Erweichungstemperatur (DIN 52 011) 128°C) | | 240 |
| Aceton II | | 240 |
| entiontes Wasser | | 1200 |
| 30 gew.-%ige NaOH-Lösung | 112 | 4,5 |

Der Mischung aus entwässertem Polyetherol (Polypropylenoxid mit einer OH-Funktionalität von 1,93 val/mol) Dimethyylolpropionsäure und Katalysator wurde das TDI zugegeben und bei einer Reaktionstemperatur von 105°C 3 Stunden umgesetzt. Nach Zulauf von Aceton I hat die Reaktionsmischung einen NCO-Gehalt von 0,56 %.

Nach Neutralisation mit der NaOH-Lösung wurde die Harzlösung, hergestellt aus Aceton II und einem Kondensat aus Phenol und einem Gemisch aus n-Butyraldehyd und iso-Butyraldehyd (Molverhältnis 1:1) zugesetzt. Nach dem Abkühlen der Lösung auf 30°C wurde innerhalb von 20 Minuten mit Wasser dispergiert, und das Aceton abdestilliert. Die Dispersion wird danach durch Rückverdünnung mit entiontem Wasser auf einen Feststoffgehalt von 40 % eingestellt.

Beispiel 6B und 6C

Die Dispersion wurde analog zu Beispiel 6A (Vergleichsbeispiel hergestellt, mit dem Unterschied, daß nach der Harzzugabe 8,0 g Aluminium- bzw. Zirkonium-)acetylacetonat, gelöst in 100 ml Aceton, zugegeben wurden.

Kontaktverklebung bei Raumtemperatur

Probenvorbereitung:

Die Dispersionen wurden mit 5 Gew.-%, bezogen auf Ihren Feststoff, pyrogener Kieselsäure angedickt.

Scherfestigkeit:

Mit einem Rakel mit 1 mm-Zahnung wurden die jeweiligen Dispersionen auf Buchenholzscheiben auf einer Fläche von 150 x 50 mm2 aufgetragen und 60 Minuten bei Raumtemperatur getrocknet. Diese Prüfkörper wurden sofort danach verklebt, indem sie 30 Sekunden bei Raumtemperatur mit einem Druck von 0,5 N/mm2 verpreßt werden. Die Scherfestigkeit wurde sofort (Sofortfestigkeit) und nach 7 Tagen Lagerung bei Raumtemperatur (Endfestigkeit) in N/mm2 gemessen.

Wärmestandfestigkeit:

Eine Hartfaserplatte wurde auf einer Fläche von 200 x 200 mm2 mit einer PVC-Folie verklebt (Kontaktverklebung bei Raumtemperatur). In einem Abschälwinkel von 180° wurde die PVC-Folie mit 300g belastet. Die Temperatur wurde alle 30 Minuten um 10°C erhöht. Angegeben ist die maximale Temperatur, bei der die PVC-Folie sich noch nicht vollständig von der Hartfaserplatte löst.

Klebetechnische Werte der Kontaktverklebung bei Raumtemperatur

| | Sofortfestigkeit [N/mm²] | | | Endfestigkeit [N/mm²] | | | Wärmestandfestigkeit [°C] | | |
|---|---|---|---|---|---|---|---|---|---|
| | A | B | C | A | B | C | A | B | C |
| Bsp. 1 | 1,2 | 1,1 | 1,0 | 3,0 | 3,0 | 2,9 | 70 | 80 | 80 |
| Bsp. 2 | 1,0 | 1,0 | 1,0 | 2,7 | 2,5 | 2,6 | 80 | 110 | 100 |
| Bsp. 3 | 0,5 | 0,5 | 0,5 | 1,5 | 1,7 | 1,4 | 70 | 80 | 80 |
| Bsp. 4 | 1,4 | 1,1 | 1,3 | 4,2 | 4,0 | 4,1 | 60 | 80 | 80 |
| Bsp. 5 | 1,5 | 1,4 | 1,3 | 5,0 | 4,8 | 4,9 | 60 | 80 | 90 |
| Bsp. 6 | 1,0 | 0,9 | 1,0 | 4,3 | 4,1 | 4,2 | 70 | 90 | 90 |

A: Dispersion ohne Chalatkomplexe (Vergleichsbeispiel)

B: Dispersion mit 1 Gew.-% Zirkoniumacetylacetonat, bezogen auf Polyurethan

C: Dispersion mit 1 Gew.-% Aluminiumacetylacetonat, bezogen auf Polyurethan

Prüfung der Kontaktverklebung nach (Wärmeaktivierung) Blitzaktivierung

Probenvorbereitung:

Die Dispersionen wurden mit 2 % Gew.-%, bezogen auf Ihren Feststoff, Polyvinylpyrrolidon angedickt.

Schälfestigkeit:

Die Dispersionen werden mit einem Pinsel (1 Zoll, feine Borsten) gleichmäßig auf Styrol-Butadiengummi (SBR1-Gummi mit einer shore-A-Härte von 90 (s. DIN 16 909)) auf einer Fläche von 30 x 130 $mm^2$ aufgestrichen und 45 Minuten bei Raumtemperatur getrocknet. Nach einmaliger Aufheizung der Klebstoffilme durch IR-Strahlung auf 80°C im Verlauf von ca. 5 Sekunden (Blitzaktivierung) wurden die Proben 10 Sekunden mit 0,5 $N/mm^2$ verpreßt. Die Schälfestigkeit wurde sofort (Sofortfestikgeit) und nach 5 Tagen Lagerung im Klimaraum (23°C/50% rel.) (Endfestigkeit) nach DIN 52273 gemessen.

Wärmestandfestigkeit:

Die Prüfkörper wurden wie zur Schälfestigkeitsprüfung hergestellt. Nach Temperung von 1 Stunde bei 50°C wurden sie bei 50°C jeweils 10 Minuten mit 5, 10, 15, 20, 25 und 30 N in aufsteigender Reihenfolge belastet. Hielt die Verklebung, so wurde die Probe entlastet, 30 Minuten auf 60°C aufgeheizt und wieder bis max. 30 N in 10 Minutenschritten geprüft. In gleicher Weise wurde die Prüfung nach jedem Durchlauf um 10°C erhöht. Angegeben sind jeweils die Temperatur (°C) und die Belastung (N) bei der eine Öffnung der Verklebung von mehr als 50 mm erkennbar war.

Klebetechnische Werte der Kontaktverklebung nach Wärmeaktivierung

| | Sofortfestigkeit [N/mm²] | | | Endfestigkeit [N/mm²] | | | Wärmestandfestigkeit [N/°C] | | |
|---|---|---|---|---|---|---|---|---|---|
| | A | B | C | A | B | C | A | B | C |
| Bsp. 1 | 1,5 | 1,4 | 1,5 | 2,4 | 2,6 | 2,4 | 50/30 | 70/10 | 60/30 |
| Bsp. 2 | 3,3 | 3,2 | 3,2 | 3,5 | 3,7 | 3,4 | 60/20 | 80/5 | 70/30 |
| Bsp. 3 | 0,8 | 0,7 | 0,8 | 3,8 | 3,9 | 3,8 | 60/30 | 70/10 | 70/10 |
| Bsp. 4 | 2,5 | 2,6 | 2,5 | 4,5 | 4,3 | 4,4 | 50/30 | 60/30 | 70/05 |
| Bsp. 5 | 2,6 | 2,5 | 2,4 | 3,7 | 3,9 | 3,9 | 50/5 | 50/30 | 50/30 |
| Bsp. 6 | 1,0 | 0,9 | 1,0 | 4,3 | 4,1 | 4,2 | 60/20 | 70/30 | 70/25 |

A: Dispersion ohne Chelatkomplexe (Vergleichsbeispiel)

B: Dispersion mit 1 Gew.-% Zirkoniumacetylacetonat, bezogen auf Polyurethan

C: Dispersion mit 1 Gew.-% Aluminiumacetylacetonat, bezogen auf Polyurethan

## Patentansprüche

1. Verwendung von wäßrigen Dispersionen, enthaltend ein Polyurethan, welches im wesentlichen aufgebaut ist aus

   a) organischen Polyisocyanaten

   b) Polyhydroxylverbindungen mit einem Molekulargewicht über 500 bis 5000 g/mol,

   c) Verbindungen mit mindestens einer gegenüber Isocyanat reaktiven Gruppe und mit mindestens einer ionischen Gruppe oder in eine ionische Gruppe überführbaren Gruppe,

   d) gegebenenfalls von c) verschiedenen Verbindungen mit mindestens zwei gegenüber Isocyanat reaktiven funktionellen Gruppen und einem Molgewicht von 60 bis 500 g/mol,

   und mindesten einem Chelatkomplex aus einem mehrwertigen Metall als Zentralatom und einem mehrzähnigen Liganden, als Klebstoff.

2. Verwendung gemäß Anspruch 1, wobei der Gehalt des Chelatkomplexes in der Dispersion 0,01 bis 5 Gew.-%, bezogen auf das Polyurethan beträgt.

3. Wäßrige Dispersion, enthaltend ein Polyurethan und einen Chelatkomplex gemäß Anspruch 1, wobei es sich bei dem mehrzähnigen Liganden um Acetylacetonat handelt.

4. Wäßrige Dispersion, enthaltend ein Polyurethan und einen Chelatkomplex gemäß Anspruch 1 oder 2 und zusätzlich ein die Haftung verbesserndes Polymer.

5. Wäßrige Dispersion nach Anspruch 4, wobei es sich bei dem die Haftung verbessernden Polymer um ein Phenolharz handelt.

6. Wäßrige Dispersion nach Anspruch 4 oder 5, wobei das die Haftung verbessernde Polymer dem Polyurethan bzw. einem Polyurethanprepolymer vor der Dispergierung in Wasser zugesetzt wird und im Falle des Polyurethanprepolymeren nach der Dispergierung die weitere Umsetzung zum Polyurethan erfolgt.

7. Verklebung, erhältlich durch Verwendung einer wäßrigen Dispersion gemäß einem der Ansprüche 1 bis 5.

## Claims

1. Use of an aqueous dispersion, containing a polyurethane which is essentially composed of

   a) organic polyisocyanates,
   b) polyhydroxy compounds having a molecular weight of from above 500 to 5,000 g/mol,
   c) compounds having at least one group reactive toward isocyanate and having at least one ionic group or group convertible into an ionic group and
   d) if required, compounds which differ from (c) and have at least two functional groups reactive toward isocyanate and a molecular weight of from 60 to 500 g/mol,

   and at least one chelate complex comprising a polyvalent metal as the central atom and a polydentate ligand, as an adhesive.

2. Use as claimed in claim 1, wherein the content of the chelate complex in the dispersion is from 0.01 to 5% by weight, based on the polyurethane.

3. An aqueous dispersion, containing a polyurethane and a chelate complex as claimed in claim 1, wherein the polydentate ligand is an acetylacetonate.

4. An aqueous dispersion, containing a polyurethane and a chelate complex as claimed in claim 1 or 2 and in addition an adhesion-improving polymer.

**5.** An aqueous dispersion as claimed in claim 4, wherein the adhesion-improving polymer is a phenol resin.

**6.** An aqueous dispersion as claimed in claim 4 or 5, wherein the adhesion-improving polymer is added to the polyurethane or to a polyurethane prepolymer prior to dispersing in water and, in the case of the polyurethane prepolymer, the further reaction to the polyurethane is carried out after dispersing.

**7.** An adhesive bond obtainable by using an aqueous dispersion as claimed in any of claims 1 to 5.

## Revendications

**1.** Utilisation de dispersions aqueuses, qui contiennent un polyuréthanne, qui est constitué, en essence,

a) de polyisocyanates organiques,
b) de composés polyhydroxylés qui possèdent un poids moléculaire supérieur à 500 à 5000 g/mole,
c) de composés avec au moins un groupe réactif sur l'isocyanate et au moins un groupe ionique ou un groupe convertible en groupe ionique,
d) éventuellement de composés qui diffèrent de c) avec au moins deux radicaux fonctionnels réactifs sur l'isocyanate et d'un poids moléculaire de 60 à 500 g/mole,

et d'au un complexe du type chélate constitué d'un métal polyvalent comme atome central et d'un ligand polydentate, à titre de colle.

**2.** Utilisation suivant la revendication 1, caractérisée en ce que la teneur en complexe du type chélate de la dispersion varie de 0,01 à 5% en poids, par rapport au polyuréthanne.

**3.** Dispersion aqueuse, qui content un polyuréthanne et un complexe du type chélate suivant la revendication 1, où il s'agit d'acétylacétonate dans le cas du ligand polydentate.

**4.** Dispersion aqueuse contenant un polyuréthanne et un complexe du type chélate suivant la revendication 1 ou 2 et, complémentairement, un polymère améliorant l'adhérence.

**5.** Dispersion aqueuse suivant la revendication 4, caractérisée en ce qu'il s'agit d'une résine de phénol dans le cas du polymère améliorant l'adhérence.

**6.** Dispersion aqueuse suivant la revendication 4 ou 5, caractérisée en ce que l'on ajoute le polymère améliorant l'adhérence au polyuréthanne ou à un prépolymère de polyuréthanne avant la dispersion dans l'eau et, dans le cas du prépolymère de polyuréthanne, on procède à la conversion complémentaire en polyuréthanne après la dispersion.

**7.** Collage que l'on peut obtenir par l'utilisation d'une dispersion aqueuse suivant l'une quelconque des revendications 1 à 5.